# EUROPÄISCHE PATENTSCHRIFT

(11) **EP 1 454 283 B1**
(45) Veröffentlichungstag und Bekanntmachung des Hinweises auf die Patenterteilung: **17.10.2007**
(21) Anmeldenummer: 02804566.4
(22) Anmeldetag: 05.12.2002
(51) Int. Cl.: G06K 1/12, G06K 19/08, G02C 7/02, B41M 5/26

(54) **VERFAHREN ZUR KENNZEICHNUNG VON GEGENST NDEN**
METHOD FOR MARKING OBJECTS
PROCEDE POUR MARQUER DES OBJETS

(30) Priorität: 05.12.2001 DE 10159521; 02.10.2002 DE 10246284
(43) Veröffentlichungstag der Anmeldung: 08.09.2004
(73) Patentinhaber: Rodenstock GmbH, 80469 München (DE)
(72) Erfinder: KÜPPER, Lutz, 94253 Bischofsmais (DE); BROSIG, Jochen, D-82031 Grünwald (DE); BAUMBACH, Peter, D-81543 München (DE); SIMKE, Andreas, 94259 Kirchberg (DE)
(74) Vertreter: Lohr, Georg
(86) Internationale Anmeldenummer: PCT/DE2002/004461
(87) Internationale Veröffentlichungsnummer: WO 2003/049952

(56) Entgegenhaltungen:
- EP-A- 1 158 456
- US-A- 3 657 085
- US-A- 4 822 973
- US-A- 4 936 608

## Beschreibung

### Technisches Gebiet

Die Erfindung bezieht sich auf ein Verfahren zur Kennzeichnung von Gegenständen gemäß dem Oberbegriff des Patentanspruchs 1.

### Stand der Technik

Es ist bekannt, im Inneren von Gegenständen Markierungen oder als Schmuckabbildungen wahrnehmbare graphische Gestaltungen anzubringen. Ein Beispiel hierfür sind Würfel aus einem Kunststoffmaterial, wie Plexiglas, in deren Inneren dreidimensional beispielsweise Gebäude, wie Schlösser, plastische Abbildungen von Persönlichkeiten oder dgl. "eingraviert" sind, ohne dass die Oberfläche des Gegenstandes irgendwelche Bearbeitungsspuren aufweist.

Bei einen aus US 2001/0028390 A1 bekannten Verfahren wird durch die Einstrahlung von mit einem großen Aperturwinkel fokussierten Bearbeitungslicht in das Innere des Gegenstandes eine derartige Materialveränderung ohne Veränderung von Begrenzungsflächen des Gegenstandes erzeugt, dass sich mindestens ein für einen Betrachter oder eine Prüfeinrichtung feststellbares Kennzeichen im Inneren des Gegenstandes ergibt.

Andererseits ist es aus der US 4,936,608 bekannt, auf der Oberfläche von Gegenständen Markenzeichen oder dgl. anzubringen. Das Anbringen dieser Markenzeichen kann dabei mit einem Laser erfolgen, der eine Vertiefung in Art einer Gravur erzeugt. Weiterhin ist es bekannt, in den Markenzeichen oder dgl. weitere insbesondere maschinell lesbare Informationen "versteckt" unterzubringen.
Derartige, auf der Oberfläche eingravierte Zeichen mit "versteckten" Informationen haben jedoch den bislang nicht erkannten Nachteil, dass sie insbesondere dann, wenn auf die Oberfläche weitere Schichten, wie beispielsweise Hartschichten oder Entspiegelungsschichten mit einem nahezu gleichen Brechungsindex - wie bei Brillengläsern üblich - aufgebracht werden, nur unzureichend maschinell erfassbar sind, da die Vertiefungen durch die Auffüllung mit dem Schichtmaterial praktisch nicht mehr erkannt werden können.

### Darstellung der Erfindung

Der Erfindung liegt die Aufgabe zugrunde, ein Verfahren zum Kennzeichnen eines Gegenstandes anzugeben, das nicht nur das Anbringen einer Markierung bzw. Kennzeichens, wie eines Markenzeichens, eines Referenzpunktes oder dgl., sondern auch das Einbringen von "versteckten" Informationen in die Markierung gestattet, ohne dass die Erkennbarkeit insbesondere der versteckten Informationen durch das Aufbringen weiterer Schichten behindert wird.

Eine erfindungsgemäße Lösung dieser Aufgabe ist im Anspruch 1 angegeben. Weiterbildungen der Erfindung sind Gegenstand der abhängigen Ansprüche.

Erfindungsgemäß wird davon abgegangen, die Markierung bzw. das Kennzeichen in die Oberfläche des zu kennzeichnenden Gegenstandes einzubringen. Stattdessen wird ein gattungsgemäßes Verfahren verwendet, das für die erfindungsgemäß gestellte Aufgabe bislang nicht in Betracht gezogen worden ist, und bei dem das Kennzeichen nicht in die Oberfläche, sondern in das Volumen des zu kennzeichnenden Gegenstandes eingebracht wird.

Erfindungsgemäß ist erkannt worden, dass es auch bei einem derartigen Verfahren möglich ist, dass wenigstens ein Kennzeichen eine Vielzahl kleinster Informationselemente umfasst, die zusätzliche Informationen zur Identifikation des jeweiligen Gegenstandes enthalten, und die zusammen zumindest Teile des Kennzeichens bilden. Dabei ist es insbesondere möglich, dass die Informationselemente für den Betrachter nicht als einzelne Informationselemente erkennbar sind, also nur maschinell, beispielsweise mit einer optischen Sensoreinrichtung "gelesen" werden können.

Das erfindungsgemäße Verfahren ist insbesondere bei Gegenständen von Vorteil, bei denen der zu kennzeichnende Gegenstand mit Ausnahme der in seinem Inneren eingebrachten Kennzeichen homogen ist, wie dies beispielsweise bei Brillengläsern - mit Ausnahme einer möglichen Variation des Brechungsindex - der Fall ist.

Die zu kennzeichnenden Gegenstände können beispielsweise aus Quarz, Silikatglas oder einem Kunststoffmaterial bestehen und insbesondere optische Linsen sein.

Als Gegenstand wird ein Brillenglas oder ein Brillenglas-Rohling verwendet.

Weiterhin ist es möglich, dass der Gegenstand aus einem im sichtbaren Wellenlängenbereich praktisch nicht durchsichtigen Kunststoffmaterial besteht. Ein Beispiel hierfür ist eine Brillenfassung insbesondere aus einem Kunststoffmaterial In diesem - wie auch in allen anderen - Fällen erfolgt die Kennzeichnung mit Licht einer Wellenlänge (UV, IR), für das der Gegenstand eine ausreichende Eindringtiefe hat.

Die Eindringtiefe muss in jedem Falle so groß sein, dass das Einbringen bzw. Gravieren einer Kennzeichnung in einem Bereich von ca. 0,1 mm bis 1 mm oder mehr, typischerweise 0,3 mm unter der Oberfläche erfolgen kann.

Besonders bevorzugt ist es, wenn das Kennzeichen und/ oder die in dem Kennzeichen versteckten Informationen für einen Betrachter nicht sichtbar und lediglich für die Prüfeinrichtung erkennbar ist.

Ferner wird bevorzugt als Lichtquelle für das Bearbeitungslicht wenigstens ein Laser, wie ein Excimer-Laser, ein Festköper- oder Halbleiterlaser verwendet. Derartige Laser sind insbesondere für durchsichtige Gegenstände, wie Brillengläser geeignet. Selbstverständlich können aber in Abhängigkeit von dem Material des zu kennzeichnenden Gegenstandes auch in anderen Wellenlängenbereichen emittierende Laser verwendet werden.

Da das erfindungsgemäß zur Kennzeichnung eingesetzte Verfahren die Herstellung von dreidimensionalen kennzeichen erlaubt, können die unterschiedlichsten Kennzeichen eingebracht werden:

Die Ebene, in der sich wenigstens ein Kennzeichen erstreckt, ist senkrecht zu der Tangentialebene an einem Punkt einer Begrenzungsfläche und insbesondere einer Oberfläche eines Brillenglases. Die Ebene des Kennzeichens kann dabei mit der Richtung des Sehstrahls zusammenfallen, so dass das Blicken durch das Brillenglas durch das Kennzeichen praktisch nicht gestört wird.

In einer weiteren vorteilhaften Ausgestaltung der Erfindung wird die Identifikationsinformation durch einzelne Bildpunkte beziehungsweise Informationselemente binär codiert.

In einer weiteren Ausgestaltung ist die Aufteilung einer Kennzeichnung in einzelne Informationselemente durch ein digitales Raster vorgegeben.

In einer weiteren vorteilhaften Ausgestaltung sind nur ausgewählte Rasterpunkte als Informationselemente zu Codierung der Identifikationsinformationen vorgesehen.

Als weitere Ausgestaltung der Erfindung werden andere Eigenschaften der Informationselemente zur Codierung vorgesehen. Diese sind beispielsweise Farbwerte, Helligkeit wehrte, Transmission wehrte oder auch die Streuung. Hierbei ist auch eine mehrstufige Codierung möglich. So können beispielsweise die Informationselemente auch in mehreren, beispielsweise fünf unterschiedlichen Helligkeitsstufen beziehungsweise Farbstufen dargestellt werden. Damit lassen sich noch größere Informationsmengen kodieren, sowie die Codierung noch stärker vor dem Auge des Betrachters kaschieren.

Eine weitere vorteilhaften Ausführung von besteht darin, dass die Informationselemente alphanumerische Zeichen umfassen. Derartige alphanumerische Zeichen sind beispielsweise Buchstaben, Zahlen oder andere Sonderzeichen. Die Information kann nun durch das alphanumerische Zeichen selbst beziehungsweise durch dessen Gestaltung wie beispielsweise Farbe, Helligkeitswert oder andere Eigenschaften codiert werden.

Eine vorteilhaften Ausgestaltung umfasst Informationselemente in Form von geometrische Figuren beziehungsweise Mustern. Derartige Figuren beziehungsweise Muster können beispielsweise Rechtecke, Rauten, Kreise oder andere sein.

Auch hier kann die Codierung der Information durch die Figur beziehungsweise das Muster selbst oder dessen Eigenschaften erfolgen.

Eine weitere vorteilhaften Ausgestaltung der Erfindung besteht darin, dass für die Darstellung der Identifikationsinformationen nur ein eingeschränkter Wertebereich der Informationselemente ausgewählt wird. Dieser Wertebereich wird derart gewählt, dass sich für den Betrachter der Kennzeichnung ein möglichst klares Bild ergibt. Können beispielsweise die Informationselemente in fünf verschiedenen Graustufen dargestellt werden, so könnte eine binäre Codierung der Information dadurch erfolgen, dass lediglich eine der optimalen Darstellung der Kennzeichnung angepasste Graustufe den Wert 0 symbolisiert und eine nur um einen Wert erhöhte Graustufe einen Wert 1 darstellt. Damit ergeben sich durch die Codierung nur geringfügige Änderungen in der optischen Wirkung der Kennzeichnung.

Weiterhin kann ein wesentlich größerer Wertebereich der Informationselemente vorgesehen werden, als zur Codierung der Identifikationsinformationen notwendig ist. Aus diesem großen Wertebereich können nun bevorzugt diejenigen Kombinationen von Werten der Informationselemente ausgewählt werden, welche die beste optischen Wirkung der Kennzeichnung hervorrufen.

In einer weiteren vorteilhaften Ausgestaltung der Erfindung können als Informationselemente auch alphanumerische Zeichen verwendet werden. Somit kann die Identifikation auch mittels einer Folge aus Ziffern und Buchstaben bestehen. Diese könnten wiederum auch unterschiedliche Farben beziehungsweise Helligkeitswerte, Strichstärken oder andere Eigenschaften zur Informationscodierung besitzen.

In einer weiteren vorteilhaften Ausgestaltung der Erfindung werden wesentlich mehr Informationselemente vorgesehen, als zu Codierung der Identifikationsinformationen notwendig sind. Um eine möglichst ansprechende optischen Wirkung der Kennzeichnung zu erreichen, wird nun aus dieser Vielzahl von Informationselementen diejenigen Menge der Informationselemente ausgewählt, welche den geringsten Einfluss auf die Darstellung der Kennzeichnung haben.

Eine vorteilhafte Ausgestaltung besteht darin, dass die Informationselemente zu Gruppen zusammengefasst werden. Weiterhin darf in einer solchen Gruppe eine maximale Anzahl von Informationselementen einer bestimmten Art nicht überschritten werden. Soll beispielsweise mit einer Gruppe von 4 möglichen Informationselementen ein Grauwert von 50 Prozent dargestellt werden, so sind mit dieser Gruppe zu Codierung verschiedene Anordnungen mit jeweils zwei aktiven und zwei inaktiven Informationselementen realisierbar, wobei sich für den Betrachter, der die einzelnen Informationselemente optisch nicht auflösen kann immer ein mittlerer Wert darstellt. Die Information ist in der Anordnung der aktiven beziehungsweise inaktiven Informationselemente innerhalb der Gruppe enthalten.

Eine weitere Ausgestaltung besteht darin, das die Informationselemente paarweise angeordnet werden und jeweils eines diese Paare aktiv und das andere inaktiv ist. Damit ergibt sich für den Betrachter der diese Informationselemente optisch nicht auflösen kann immer ein mittlerer Wert von 50 Prozent der Helligkeit, Transmission beziehungsweise des Farbwertes oder einer anderen Eigenschaft.

Als weitere Ausgestaltung werden wesentlich mehr Informationselemente vorgesehen als zu Codierung der Identifikationsinformationen notwendig sind, wobei mittels dieser Informationselemente eine individuelle Darstellung der Kennzeichnung erfolgt. Diese Darstellung der Kennzeichnung kann nun auf die Wirkung auf den Betrachter hin optimiert werden. Wesentlich hierbei ist, dass zur Darstellung der Identifikation individuelle Ausgestaltungen der Kennzeichnung verwendet werden, welche sich zumindest geringfügig von den anderen Ausgestaltungen der Kennzeichnung unterscheiden. Solche Unterschiede können beispielsweise in der An- beziehungsweise Abwesenheit einzelner Bildpunkte, in einem seitlichen Versatz ganzer Reihen von Bildpunkten oder auch einer Anordnung der Bildpunkte derart, dass sich eine Kennzeichnung mit einem geringfügig geänderten Maßstab ergibt, enthalten sein. Bei dieser Art der Ausgestaltung kann somit, wenn beispielsweise an einer üblicherweise dunklen Stelle bereits zu viele helle Bildpunkte das Erscheinungsbild stören würden, die Codierung durch andere helle beziehungsweise dunkle Bildpunkte an anderen Stellen vervollständigt werden.

Erfindungsgemäß werden weiterhin Verfahren zur Identifizierung erfindungsgemäß gekennzeichneten Gegenstandes angegeben:

Insbesondere ist es möglich, dass wenigstens eine Prüflichtquelle verwendet wird, deren Licht an dem oder den Kennzeichen reflektiert, gestreut und/oder gebrochen wird, und dass das reflektierte, gestreute und/oder gebrochene Licht von wenigstens einem Detektor erfasst wird, dessen Ausgangssignal an einer Auswerteeinheit anliegt, die aus der Vielzahl kleinster Informationselemente produktrelevante Informationen ermittelt.

Bei einer Weiterbildung dienen die ermittelten Informationen zur Steuerung weiterer Fertigungsschritte an dem identifizierten Gegenstand. Dabei ist es bevorzugt, wenn das Verfahren eine eindeutige Identifizierung des Gegenstandes erlaubt. Dies ist auch bei Reklamationen von Vorteil.

Das Verfahren der Lasergravur ermöglicht es, hochauflösend Informationen auf kleinsten Flächen unterzubringen. Zu können nach dem heutigen Stand der Technik problemlos einzelne Punkte mit einem Durchmesser von 5 bis 10 Mikrometer erzeugt werden.

### Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben, in der zeigen:
- Fig. 1:: eine allgemeine Ausführungsform der Erfindung,
- Fig. 2:: eine verkleinerte Darstellung der allgemeinen Ausführungsform der Erfindung,
- Fig. 3:: eine Ausführungsform der Erfindung mit binärer Codierung,
- Fig. 4:: eine verkleinerte Darstellung der Ausführungsform der Erfindung mit binärer Codierung,
- Fig. 5:: eine Ausführungsform der Erfindung mit alphanumerischer Codierung,
- Fig. 6:: eine verkleinerte Darstellung der Ausführungsform mit alphanumerischer Codierung,
- Fig. 7:: eine Ausführungsform der Erfindung mit binärer Codierung,
- Fig. 8:: eine verkleinerte Darstellung der Ausführungsform der Erfindung mit binärer Codierung,
- Fig. 9:: eine binäre Codierung mittels heller und dunkler Punkte, und
- Fig. 10:: die binäre Codierung mittels Gruppen aus hellen und dunklen Punkten

### Beschreibung von Ausführungsbeispielen

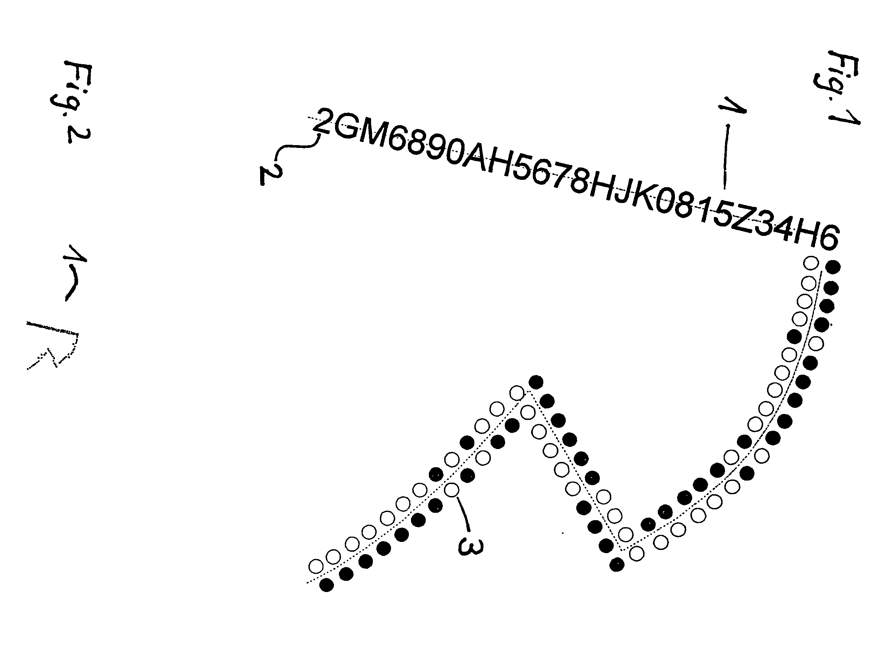

In Figur 1 ist beispielhaft die Darstellung eines stilisierten Buchstabens (1) mittels einer Vielzahl von Informationselementen in einem stark vergrößerten Maßstab von 50:1 skizziert. So sind bei einem Teil des Buchstabens die Informationselemente als alphanumerische Zeichen (2) ausgeführt, während in einem anderen Teil des Buchstabens die Informationselemente Bildpunkte (3) zur Darstellung einer binären Codierung sind. Ein solcher Buchstabe ist beispielsweise durch Lasergravur in die Oberfläche eines Brillenglases eingebracht. Die Gesamtgröße des Buchstabens kann beispielsweise 2,5 Millimeter betragen.

Figur 2 zeigt beispielhaft eine verkleinerte Darstellung von Figur 1, welche gegenüber dem Original noch um einen Faktor 5:1 vergrößert ist, um einen Eindruck der optischen Wirkung des stilisierten Buchstabens (1) zu vermitteln.

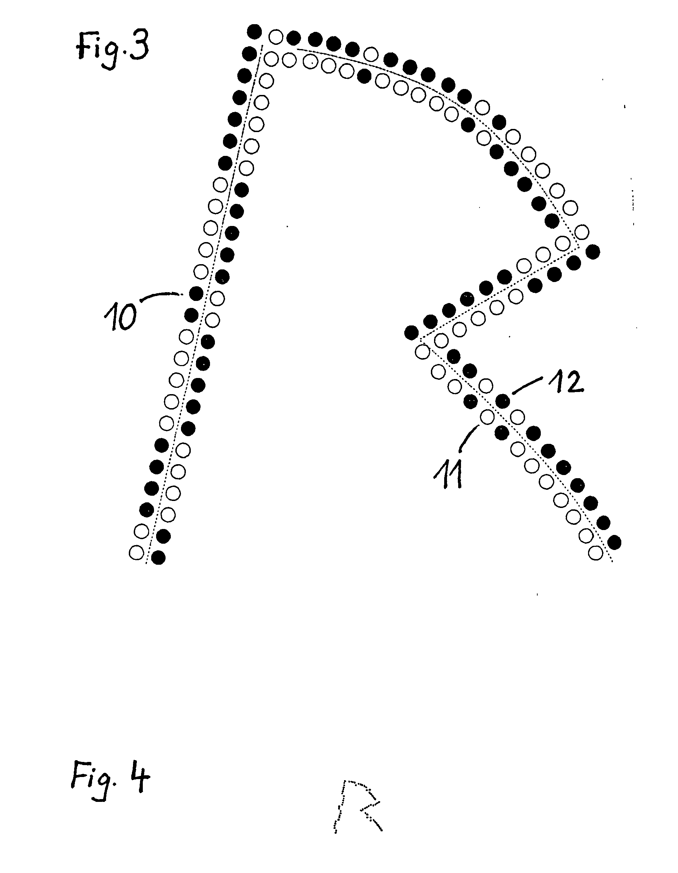

In Figur 3 ist beispielhaft ein stilisierter Buchstabe (10) dargestellt, bei dem die Informationselemente ausschließlich Bildpunkte zur Darstellung einer binären Codierung sind. Dabei sind die Bildpunkte jeweils paarweise zu Gruppen zusammengefasst, wobei in jeder Gruppe genau ein erster Bildpunkt (11) hell und ein zweiter Bildpunkt (12) dunkel ist. Die Information ist nun in der Zuordnung von hellen beziehungsweise dunklen Bildpunkten enthalten. In diesem Beispiel ist der stilisierter Buchstabe aus 64 Gruppen von Punkten zusammengesetzt. Damit ergibt sich die Möglichkeit zur Darstellung von 2⁶⁴ = 1.8*10¹⁹ unterschiedlichen Kombinationen.

Figur 4 zeigt beispielhaft wieder eine verkleinerte Darstellung von Figur 3 um auch hier einen Eindruck der optischen Wirkung des stilisierten Buchstabens (10) zu vermitteln.

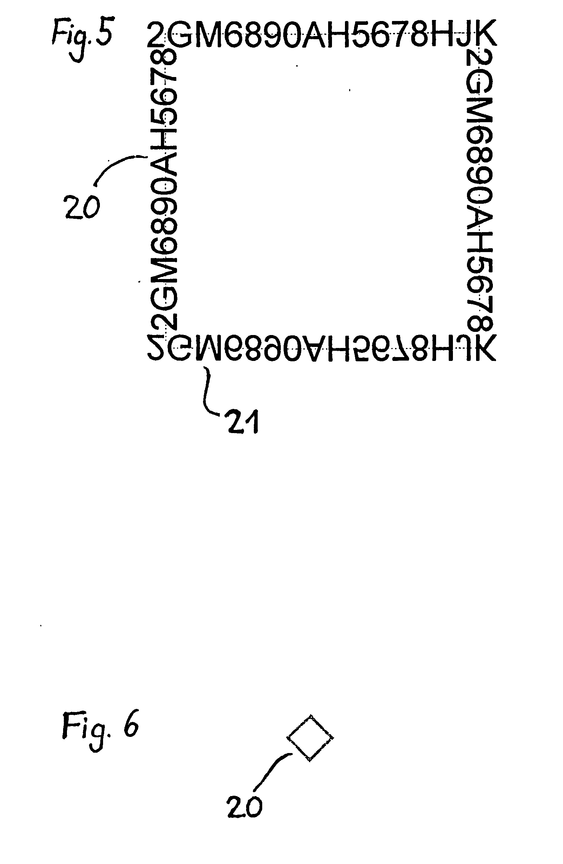

Figur 5 zeigt beispielhaft ein Quadrat (20), bei dem die Informationselemente als alphanumerische Zeichen (21) ausgeführt sind.

Figur 6 zeigt beispielhaft eine verkleinerte Darstellung von Figur 5 um einen Eindruck der optischen Wirkung des Quadrats (20) zu vermitteln.

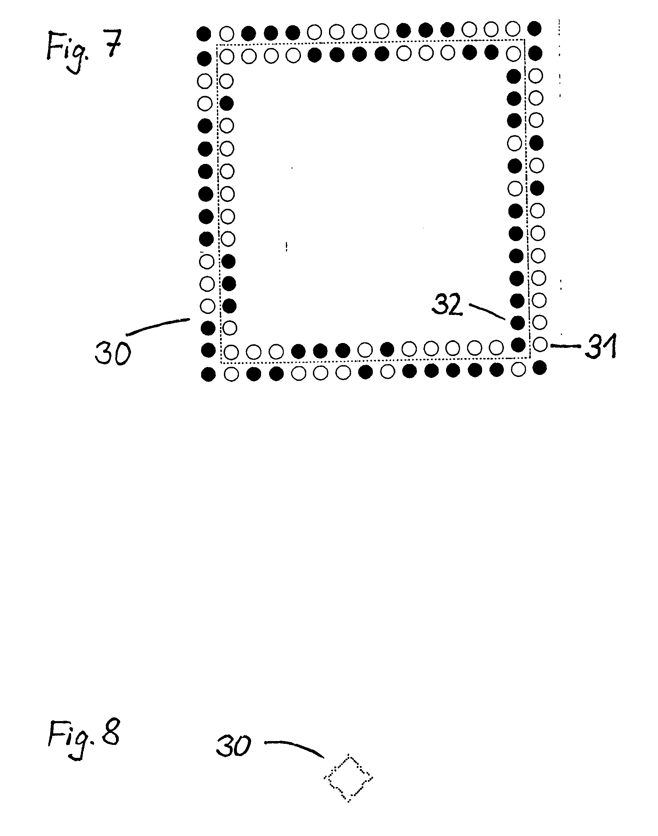

Figur 7 zeigt beispielhaft ein Quadrat (30), bei dem die Informationselemente als helle Bildpunkte (31) beziehungsweise dunkle Bildpunkte (32) ausgeführt sind. In diesem Beispiel ist das Quadrat aus 56 Gruppen von Bildpunkten zusammengesetzt. Damit ergibt sich die Möglichkeit zur Darstellung von 2⁵⁶ = 7*10¹⁶ unterschiedlichen Kombinationen.

Figur 8 zeigt beispielhaft eine verkleinerte Darstellung von Figur 7 um einen Eindruck der optischen Wirkung des Quadrats (30) zu vermitteln.

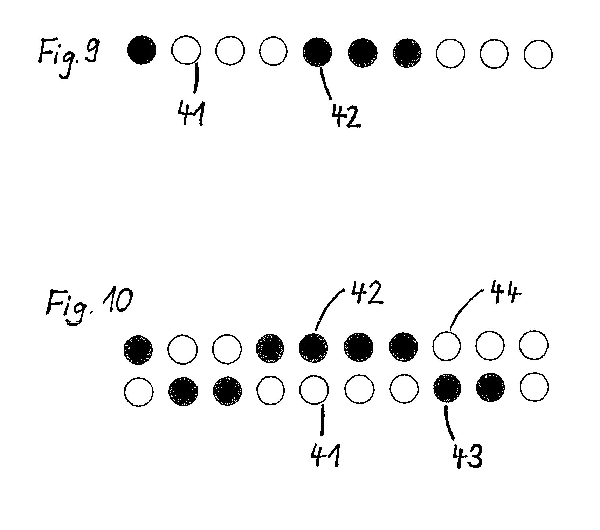

Figur 9 zeigt beispielhaft die Codierung von Informationen mittels heller Punkte (41) und dunkler Punkte (42), wie sie beispielsweise durch Lasergravur in ein Brillenglas eingebracht werden können.

Figur 10 ist eine binäre Codierung mittels Gruppen von Bildpunkten dargestellt, wobei jede Gruppe aus genau einem hellen Punkt (41) und einem Dunklen Punkt (42) besteht. Die Information ist durch die Anordnung der Punkte innerhalb der Gruppen gegeben. So kann beispielsweise die Gruppe aus einem hellen Punkt (41) und einem dunklen Punkt (42) eine Logische 0 repräsentieren, während die Gruppe aus einem Dunklen Punkt (43) sowie einem hellen Punkt (44) eine Logische 1 darstellt.

## Patentansprüche

1. Verfahren zur Kennzeichnung von Gegenständen, die in wenigstens einem Spektralbereich von UV bis IR eine Eindringtiefe für Licht aus diesem Spektralbereich von wenigstens einigen Millimetern aufweisen,
bei dem durch die Einstrahlung von mit einem großen Aperturwinkel fokussierten Bearbeitungslicht im Inneren des Gegenstandes eine derartige Materialveränderung ohne Veränderung von Begrenzungsflächen des Gegenstandes erzeugt wird, dass sich mindestens ein für einen Betrachter oder eine Prüfeinrichtung feststellbares Kennzeichen im Inneren des Gegenstandes ergibt,
**dadurch gekennzeichnet, dass**
der Gegenstand aus Quarz, Silikatglas oder einem Kunststoffmaterial besteht und dass
wenigstens ein derartiges Kennzeichen eine Vielzahl kleinster Informationselemente umfasst, die zusätzliche Informationen zur Identifikation des jeweiligen Gegenstandes enthalten, und die zusammen zumindest Teile des Kennzeichens bilden und dass sich die Ebene, in der sich das wenigstens ein Kennzeichen erstreckt, senkrecht zu der Tangentialebene an einen Punkt einer Begrenzungsfläche erstreckt.

2. Verfahren nach Anspruch 1,
**dadurch gekennzeichnet, dass** die Informationselemente für den Betrachter nicht als einzelne Informationselemente erkennbar sind.

3. Verfahren nach Anspruch 1 oder 2,
**dadurch gekennzeichnet, dass** der Gegenstand mit Ausnahme der in seinem Inneren eingebrachten Kennzeichen homogen ist.

4. Verfahren nach Anspruch 3,
**dadurch gekennzeichnet, dass** als Gegenstand ein Brillenglas oder ein Brillenglas-Rohling verwendet wird.

5. Verfahren nach einem der Ansprüche 1 bis 3,
**dadurch gekennzeichnet, dass** der Gegenstand aus einem im sichtbaren Wellenlängenbereich praktisch nicht durchsichtigen Kunststoffmaterial besteht.

6. Verfahren nach Anspruch 5,
**dadurch gekennzeichnet, dass** als Gegenstand eine Brillenfassung verwendet wird.

7. Verfahren nach Anspruch 5 oder 6,
**dadurch gekennzeichnet, dass** das Kennzeichen für einen Betrachter nicht sichtbar und lediglich für die Prüfeinrichtung erkennbar ist.

8. Verfahren nach einem der Ansprüche 1 bis 7,
**dadurch gekennzeichnet, dass** als Lichtquelle für das Bearbeitungslicht wenigstens ein Laser, wie Excimer-Laser, ein Festkörperlaser und insbesondere ein Diodenlaser oder ein Neodym-YAG-Laser verwendet wird.

9. Verfahren nach einem der Ansprüche 1 bis 8,
**dadurch gekennzeichnet, dass** die Informationselemente einzelne Bildpunkte beziehungsweise Bildelemente sind, welche die Identifikationsinformation auf binärem Wege darstellen.

10. Verfahren nach einem der Ansprüche 1 bis 9,
**dadurch gekennzeichnet, dass** zur Aufteilung in einzelne Informationselemente die Kennzeichnung in ein digitales Raster eingeteilt ist.

11. Verfahren nach einem der Ansprüche 1 bis 10,
**dadurch gekennzeichnet, dass** zur Informationscodierung nur einzelne ausgewählte Rasterpunkte vorgesehen sind.

12. Verfahren nach einem der Ansprüche 1 bis 11,
**dadurch gekennzeichnet, dass** die Informationselemente einzelne Bildpunkte beziehungsweise Bildelemente sind, deren Farbwert, Helligkeitswert beziehungsweise Transmissionswert oder auch Streuung die Identifikationsinformation darstellt.

13. verfahren nach einem der Ansprüche 1 bis 12,
**dadurch gekennzeichnet, dass** die Informationselemente alphanumerische Zeichen umfassen, welche durch das Zeichen selbst beziehungsweise durch andere Eigenschaften wie beispielsweise Farbwert, Helligkeit die Identifikationsinformation darstellen.

14. Verfahren nach einem der Ansprüche 1 bis 13,
**dadurch gekennzeichnet, dass** die Informationselemente geometrische Figuren beziehungsweise Muster umfassen, welche durch die Figur bzw. das Muster selbst beziehungsweise durch andere Eigenschaften wie beispielsweise Farbwert, Helligkeit die Identifikationsinformation darstellen.

15. Verfahren nach einem der Ansprüche 1 bis 14,
**dadurch gekennzeichnet, dass** zur Codierung der Identifikationsinformation aus dem Wertebereich der Informationselemente nur eine zur Codierung notwendige Auswahl getroffen wird und bevorzugt Werte derart ausgewählt werden, dass sich für den Betrachter ein mögliches klares Bild der Kennzeichnung ergibt.

16. Verfahren nach einem der Ansprüche 1 bis 15,
**dadurch gekennzeichnet, dass** der Wertebereich der Informationselemente wesentlich größer ist als zur Codierung der Identifikationsinformation notwendig, und durch Auswahl der Werte zur Codierung der Identifikationsinformation ein individuelles Muster derart dargestellt wird, dass sich für den Betrachter eine gute erkennbare Kennzeichnung ergibt.

17. Verfahren nach einem der Ansprüche 1 bis 16,
**dadurch gekennzeichnet, dass** wesentlich mehr Informationselemente vorgesehen sind, als zur Codierung der Identifikationsinformation notwendig sind, und dass aus dieser Vielzahl der Informationselemente zur Codierung der Identifikationsinformation bevorzugt diejenigen ausgewählt werden, durch welche sich für den Betrachter die geringste Beeinträchtigung der Erkennbarkeit der Kennzeichnung ergibt.

18. Verfahren nach einem der Ansprüche 1 bis 17,
**dadurch gekennzeichnet, dass** die Informationselemente in Gruppen angeordnet sind und in jeder Gruppe nur eine maximale Anzahl von Informationselementen einen bestimmten Wert annehmen darf.

19. Verfahren nach einem der Ansprüche 1 bis 18,
**dadurch gekennzeichnet, dass** die Informationselemente paarweise angeordnet sind und in jedem Paar genau ein Informationselement anwesend und genau ein Informationselement abwesend ist, so dass sich die Codierung durch die Zuordnung der Informationselemente ergibt.

20. Verfahren nach einem der Ansprüche 1 bis 19,
**dadurch gekennzeichnet, dass** wesentlich mehr Informationselemente vorgesehen sind, als diese zur Codierung der Identifikationsinformation notwendig sind und zur Codierung der Identifikationsinformation mittels dieser ein individuelles Muster dargestellt wird, welches für den Betrachter eine gut erkennbare Kennzeichnung ergibt.

21. Verfahren zur Identifizierung eines nach einem der Ansprüche bis 1 bis 20 **gekennzeichnet**en Gegenstandes,
**dadurch gekennzeichnet, dass** wenigstens eine Prüflichtquelle verwendet wird, deren Licht an dem
oder den Kennzeichen reflektiert, gestreut und/oder gebrochen wird, und dass das reflektierte, gestreute und/oder gebrochene Licht von wenigstens einem Detektor erfasst wird, dessen Ausgangssignal an einer Auswerteeinheit anliegt, die aus der Vielzahl kleinster Informationselemente produktrelevante Informationen ermittelt.

22. Verfahren nach Anspruch 21,
**dadurch gekennzeichnet, dass** die ermittelten Informationen zur Steuerung weiterer Fertigungsschritte an dem identifizierten Gegenstand dienen.

23. Verfahren nach einem der Ansprüche 1 bis 22,
**dadurch gekennzeichnet, dass** das Verfahren eine eindeutige Identifizierung des Gegenstandes erlaubt.

## Claims

1. A method for marking objects which have in at least one spectral range of UV to IR have a penetration depth for light from said spectral range of at least a few millimetres, in which such a change in material is produced in the interior of the object without changing the boundary surfaces of the object by irradiation of machining light focussed with a large aperture angle, that at least one marking is obtained in the interior of the object which can be determined by an observer or a testing device, **characterized in that** the object consists of quartz, silicate glass or a plastic material, and that at least one such marking comprises a plurality of minute information elements which contain additional information for identifying the respective object and which jointly form at least parts of the marking, and that the plane in which the at least one marking extends extends perpendicular to the tangential plane at a point of a boundary surface.

2. A method according to claim 1, **characterized in that** the minute information elements cannot be recognized by the observer as individual information elements.

3. A method according to claim 1 or 2, **characterized in that** the object is homogeneous with the exception of the markings introduced into its interior.

4. A method according to claim 3, **characterized in that** a spectacle lens or a lens blank is used as the object.

5. A method according to one of the claims 1 to 3, **characterized in that** the object consists of a plastic material which is virtually not transparent in the visible wavelength range.

6. A method according to claim 5, **characterized in that** a spectacle frame is used as the object.

7. A method according to claim 5 or 6, **characterized in that** the marking is not visible to an observer and can merely be recognized by the testing device.

8. A method according to one of the claims 1 to 7, **characterized in that** at least one laser such as an excimer laser, a solid-state laser and especially a diode laser or a neodymium-YAG laser is used as a light source for the machining light.

9. A method according to one of the claims 1 to 8, **characterized in that** the minute information elements are individual image points and/or image elements which display the identification information a in binary manner.

10. A method according to one of the claims 1 to 9, **characterized in that** the marking is divided into a digital raster for dividing individual information elements.

11. A method according to one of the claims 1 to 10, **characterized in that** only individually selected raster points are provided for information encoding.

12. A method according to one of the claims 1 to 11, **characterized in that** the minute information elements are individual image points or image elements whose color value, brightness value and/or transmission value or scattering represents the identification information.

13. A method according to one of the claims 1 to 12, **characterized in that** the minute information elements comprise alphanumeric characters which represent the identification information by the character itself or by other properties such as colour value, brightness.

14. A method according to one of the claims 1 to 13, **characterized in that** the information elements comprise geometrical figures and/or patterns which represent the identification information through the figure or the pattern itself or by other properties such as colour value, brightness.

15. A method according to one of the claims 1 to 14, **characterized in that** only a selection necessary for encoding is made from the value range of the minute information elements for encoding the identification information and values are preferably chosen in such way that the clearest possible image of the marking is obtained for the observer.

16. A method according to one of the claims 1 to 15, **characterized in that** the value range of the minute information elements is substantially larger than is necessary for encoding the identification information, and an individual pattern is displayed by selection of the values for encoding of the identification information in such a way that a well recognizable marking is obtained for the observer.

17. A method according to one of the claims 1 to 16, **characterized in that** substantially more minute information elements are provided than are necessary for encoding the identification information, and that from said plurality of minute information elements for encoding the identification information preferably such are chosen by which the lowest impairment in the recognizability of the marking is provided to the observer.

18. A method according to one of the claims 1 to 17, **characterized in that** the minute information elements are arranged in groups and only a maximum number of minute information elements in each group may take a specific value.

19. A method according to one of the claims 1 to 18, **characterized in that** the minute information elements are arranged in pairs and precisely one minute information element is present in each pair and precisely one information element is missing, so that the encoding is obtained by the allocation of the information elements.

20. A method according to one of the claims 1 to 19, **characterized in that** substantially more information elements are provided than are necessary for encoding the identification information and for encoding the identification information an individual pattern is shown by means of the same which produces a marking that is well recognizable for the observer.

21. A method for identifying an object **characterized** according to one of the claims 1 to 20, **characterized in that** at least one test light source is used whose light is reflected, scattered or refracted on the marking(s), and that the reflected, scattered and/or refracted light is detected by at least one detector whose output signal is applied to an evaluation unit which determines product-relevant information from the plurality of minute information elements.

22. A method according to claim 21, **characterized in that** the determined information is used for controlling further production steps on the identified object.

23. A method according to one of the claims 1 to 22, **characterized in that** the method allows for a definite identification of the object.

## Revendications

1. Procédé pour marquer des objets, qui présentent dans au moins une gamme spectrale des ultraviolets aux infrarouges une profondeur de pénétration pour la lumière émise de cette gamme spectrale d'au moins quelques millimètres,
au cours duquel est produite, par la radiation incidente de lumière de traitement focalisée avec un grand angle d'ouverture à l'intérieur de l'objet, une telle modification de matière sans modification de surfaces de délimitation de l'objet, de sorte qu'au moins une marque pouvant être constatée par un observateur ou une installation de contrôle est produite à l'intérieur de l'objet,
**caractérisé en ce que**
l'objet est en quartz, en verre siliconé ou en matériau plastique et **en ce que**
au moins un tel type de marque comprend une pluralité des plus petits éléments d'information qui contiennent des informations supplémentaires pour l'identification de l'objet concerné, et qui forment conjointement au moins des parties de la marque, et **en ce que** le plan dans lequel s'étend la au moins une marque s'étend perpendiculairement au plan tangentiel à un point d'une surface de délimitation.

2. Procédé selon la revendication 1,
**caractérisé en ce que** les éléments d'information pour l'observateur ne sont pas reconnaissables en tant qu'éléments d'information individuels.

3. Procédé selon la revendication 1 ou 2,
**caractérisé en ce que** l'objet est homogène à l'exception des marques déposées dans sa partie interne.

4. Procédé selon la revendication 3,
**caractérisé en ce qu'**un verre de lunettes ou une ébauche de verre de lunettes est utilisé en tant qu'objet.

5. Procédé selon l'une des revendications 1 à 3,
**caractérisé en ce que** l'objet est formé d'un matériau plastique pratiquement non transparent dans la gamme de longueurs d'onde visibles.

6. Procédé selon la revendication 5,
**caractérisé en ce qu'**une monture de lunettes est utilisée en tant qu'objet.

7. Procédé selon la revendication 5 ou 6,
**caractérisé en ce que** la marque n'est pas visible pour un observateur et est uniquement reconnaissable par l'installation de contrôle.

8. Procédé selon l'une des revendications 1 à 7,
**caractérisé en ce que** en tant que source de lumière pour la lumière de traitement est utilisé au moins un laser, tel qu'un laser à excimères, un laser à corps solide et en particulier un laser à diode ou un laser GYA au néodyme.

9. Procédé selon l'une des revendications 1 à 8, **caractérisé en ce que** les éléments d'information sont des points d'image individuels et/ou des éléments d'image qui représentent les informations d'identification de manière binaire.

10. Procédé selon l'une des revendications 1 à 9, **caractérisé en ce que** la marque est divisée en une trame numérique en vue de la répartition en éléments d'information individuels.

11. Procédé selon l'une des revendications 1 à 10, **caractérisé en ce que** seuls des points de trame individuels sélectionnés sont prévus pour le codage des informations.

12. Procédé selon l'une des revendications 1 à 11, **caractérisé en ce que** les éléments d'information sont des points d'image individuels et/ou des éléments d'image, dont la valeur chromatique, la luminosité et/ou la valeur de transmission ou même la diffusion représente l'information d'identification.

13. Procédé selon l'une des revendications 1 à 12, **caractérisé en ce que** les éléments d'information comprennent des symboles alphanumériques qui représentent l'information d'identification par le symbole lui-même et/ou par d'autres propriétés telles que par exemple la valeur chromatique, la luminosité.

14. Procédé selon l'une des revendications 1 à 13, **caractérisé en ce que** les éléments d'information comprennent des figures géométriques et/ou des motifs, qui représentent l'information d'identification par la figure et/ou le motif lui-même et/ou par d'autres propriétés, telles que par exemple la valeur chromatique, la luminosité.

15. Procédé selon l'une des revendications 1 à 14, **caractérisé en ce que** pour coder l'information d'identification à partir de la gamme de valeurs des éléments d'information, seule une sélection nécessaire au codage est effectuée, et de préférence des valeurs sont sélectionnées de façon à produire une image aussi claire que possible de la marque pour l'observateur.

16. Procédé selon l'une des revendications 1 à 15, **caractérisé en ce que** la gamme de valeurs des éléments d'information est considérablement plus importante que nécessaire au codage de l'information d'identification, et par sélection des valeurs pour le codage de l'information d'identification un motif individuel est représenté de façon à produire une marque facilement reconnaissable pour l'observateur.

17. Procédé selon l'une des revendications 1 à 16, **caractérisé en ce que** beaucoup plus d'éléments d'information sont prévus que nécessaires au codage de l'information d'identification, et **en ce que** à partir de cette pluralité d'éléments d'information pour le codage de l'information d'identification de préférence sont sélectionnés ceux grâce auxquels l'atteinte à la capacité de reconnaissance de la marque est la plus faible possible pour l'observateur.

18. Procédé selon l'une des revendications 1 à 17, **caractérisé en ce que** les éléments d'information sont disposés en groupes, et dans chaque groupe seul un nombre maximal d'éléments d'information peut occuper une certaine valeur.

19. Procédé selon l'une des revendications 1 à 18, **caractérisé en ce que** les éléments d'information sont disposés par paires et dans chaque paire exactement un élément d'information est présent et exactement un élément d'information est absent, de sorte que le codage a lieu par l'attribution des éléments d'information.

20. Procédé selon l'une des revendications 1 à 19, **caractérisé en ce que** beaucoup plus d'éléments d'information sont prévus que nécessaires au codage de l'information d'identification, et pour le codage de l'information d'identification au moyen de ceux-ci un motif individuel est représenté qui produit pour l'observateur une marque facilement reconnaissable.

21. Procédé d'identification d'un objet **caractérisé** selon l'une des revendications 1 à 20,
**caractérisé en ce qu'**au moins une source de lumière de contrôle est utilisée dont la lumière est réfléchie, diffusée et/ou réfractée sur la marque ou reflète la marque, et **en ce que** la lumière réfléchie, diffusée et/ou réfractée est saisie par au moins un détecteur dont le signal de sortie est adjacent à une unité d'évaluation qui détermine à partir de la pluralité des plus petits éléments d'information des informations pertinentes sur le produit.

22. Procédé selon la revendication 21,
**caractérisé en ce que** les informations déterminées sont utilisées pour la commande des autres étapes de fabrication relatives à l'objet identifié.

23. Procédé selon l'une des revendications 1 à 22, **caractérisé en ce que** le procédé permet une identification claire de l'objet.
